# EUROPEAN PATENT APPLICATION

(11) **EP 4 765 873 A1**
(43) Date of publication of application: **24.06.2026**
(21) Application number: 25208806.7
(22) Date of filing: 15.10.2025
(51) Int. Cl.: H04R 3/04

(54) **COMPUTER DEVICE AND AUDIO CORRECTION METHOD**

(30) Priority: 20.12.2024 TW 113149840
(71) Applicant: Giga-Byte Technology Co., Ltd., New Taipei City 231 (TW)
(72) Inventor: SUN, Pei-Hua, 231 New Taipei City (TW); LIU, Chia Cheng, 231 New Taipei City (TW); LIN, Yin-Yu, 231 New Taipei City (TW)
(74) Representative: Becker, Eberhard

(57) **Abstract**

The invention provides a computer device (100) and an audio correction method. The computer device (100) includes a sensor (120), an audio player (130), and a processor (110). The audio player (130) faces a placement surface (S1). The processor (110) is coupled to the sensor (120) and the audio player (130). The processor (110) obtains a physical parameter via the sensor (120) and determines a material type of the placement surface (S1) according to the physical parameter. The processor (110) adjusts an equalizer of the audio player (130) according to the material type, so that the audio player (130) performs audio playback according to the adjusted equalizer.

## Description

### BACKGROUND OF THE INVENTION

### Field of the Invention

The invention relates to a device, and more particularly to a computer device and a hearing correction method.

### Description of Related Art

Currently, the sound hole of built-in speakers of typical laptop computers are mostly disposed at the bottom of the computer, and perform audio playback in a downward-firing manner, where the sound is reflected off the placement surface before reaching the ears of the user. However, the sound quality of the reflected audio reflected from the placement surface is varied depending on the material (i.e., the degree of hardness) of the placement surface. In particular, when the laptop computer is placed on a soft surface, the reflection of high-frequency sound is not as good as expected, resulting in a significant absorption of high-frequency sound by the soft surface. As a result, the overall sound performance of the built-in speakers exhibits abnormalities, such as a muffled sound or a significant attenuation of certain high-frequency sounds.

### SUMMARY OF THE INVENTION

The invention provides a computer device and a hearing correction method that may automatically adjust the audio effect played by the computer device.

A computer device of the invention includes a sensor, an audio player, and a processor. The audio player faces a placement surface. The processor is coupled to the sensor and the audio player. The processor obtains a physical parameter via the sensor and determines a material type of the placement surface according to the physical parameter. The processor adjusts an equalizer of the audio player according to the material type, so that the audio player performs audio playback according to the adjusted equalizer.

A hearing correction method of the invention includes following steps. A physical parameter is obtained via a sensor. A material type of a placement surface is determined according to the physical parameter. The equalizer of the audio player is adjusted according to the material type so that the audio player performs audio playback toward the placement surface according to the adjusted equalizer.

Based on the above, the computer device and the hearing correction method of the invention may automatically determine the material type of the placement surface where the computer device is currently placed, so as to adjust the equalizer of the audio player accordingly according to the material type.

In order to make the above features and advantages of the invention more clearly understood, embodiments are given below and described in detail with reference to the accompanying drawings.

### BRIEF DESCRIPTION OF THE DRAWINGS

FIG. 1 is a circuit diagram of a computer device of an embodiment of the invention.
FIG. 2 is a schematic diagram of a computer device of an embodiment of the invention.
FIG. 3 is a flowchart of a hearing correction method of an embodiment of the invention.
FIG. 4A is a signal waveform diagram corresponding to a test audio of one fixed frequency of an embodiment of the invention.
FIG. 4B is a signal waveform diagram of a reflected audio of an embodiment of the invention.
FIG. 4C is a signal waveform diagram of a reflected audio of another embodiment of the invention.
FIG. 5 is a schematic diagram of an audio curve of an embodiment of the invention.

### DESCRIPTION OF THE EMBODIMENTS

In order to make the content of the invention more clearly understood, the following embodiments are given as examples of how the disclosure may be truly implemented. In addition, wherever possible, elements/components/steps with the same reference numerals in the drawings and embodiments may represent the same or similar components.

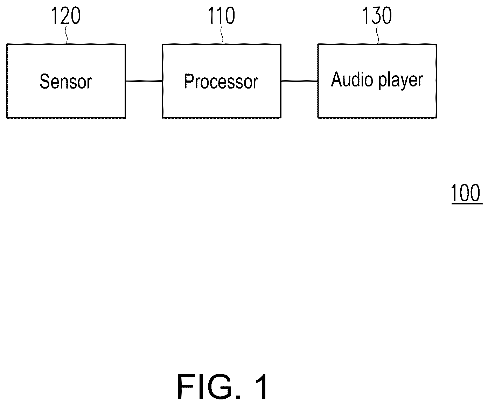

FIG. 1 is a schematic diagram of a computer device of an embodiment of the invention. Referring to FIG. 1, a computer device 100 includes a processor 110, a sensor 120, and an audio player 130. The processor 110 is coupled to the sensor 120 and the audio player 130. In the present embodiment, the processor 110 may sense the material type of the placement surface where the computer device 100 is current placed via the sensor 120 and may adjust the equalizer of the audio player 130 accordingly according to the material type.

In the present embodiment, the processor 110 may be, for example, a central processing unit (CPU), other programmable general-purpose or special-purpose microprocessors, a digital signal processor (DSP), an application-specific integrated circuit (ASIC), a programmable logic device (PLD), other similar arithmetic circuits, or a combination of these circuits. In the present embodiment, the computer device 100 may further include a storage unit. The storage unit may include, for example, any type of hard-disk drive (HDD), solid-state drive (SSD), non-volatile memory (NVM), dynamic random-access memory (DRAM), or static random-access memory (SRAM), etc. The storage unit may be used to store relevant data of the invention, the computing module, and the programs related to the equalizer, and may be read and executed by the processor 110.

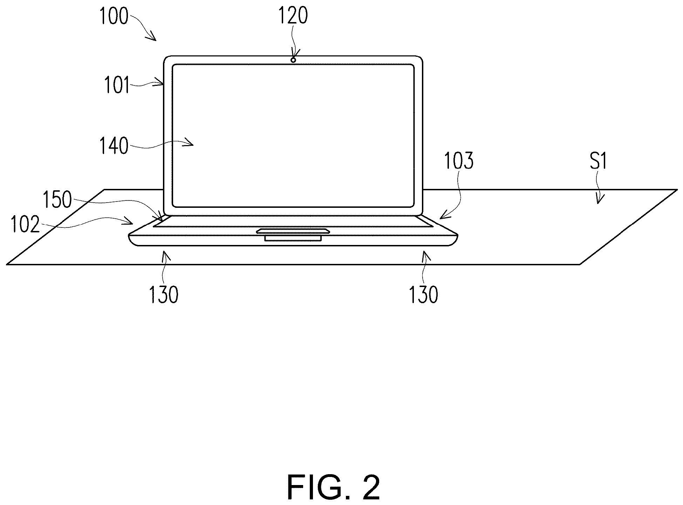

FIG. 2 is a schematic diagram of a computer device of an embodiment of the invention. Referring to FIG. 1 and FIG. 2, in the present embodiment, the computer device 100 may be implemented as a laptop computer as shown in FIG. 2. The computer device 100 may include a first body 101, a second body 102, and a rotatable member 103. The second body 102 is connected to the first body 101 via the rotatable member 103, and the bottom surface of the second body 102 faces a placement surface S1. The audio player 130 may be disposed at two sides of the bottom surface of the second body 102, but the invention is not limited thereto. In the present embodiment, the audio player 130 may perform audio playback from the bottom surface of the second body 102 toward the placement surface S1.

In the present embodiment, the computer device 100 may further include a display 140 and a keyboard module 150. The display 140 may be disposed at a display area of a surface of the first body 101. The keyboard module 150 may be disposed at the upper surface of the second body 102. In the present embodiment, the sensor 120 may be an audio receiver (or a microphone) and may be disposed, for example, at an area surrounding the display 140 of the surface of the first body 101 (e.g., above the display 140), but the invention is not limited thereto. In an embodiment, the sensor 120 may also be a pressure sensor or a light source sensor.

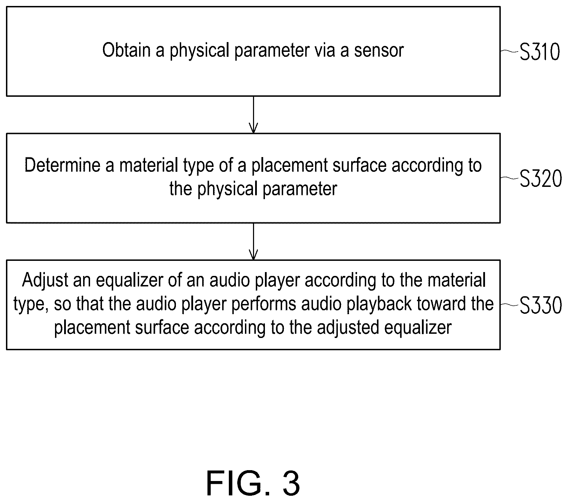

FIG. 3 is a flowchart of a hearing correction method of an embodiment of the invention. Referring to FIG. 1 to FIG. 3, the computer device 100 may execute steps S310 to S330. In step S310, the processor 110 may obtain a physical parameter via the sensor 120. In step S320, the processor 110 may determine the material type of the placement surface S1 according to the physical parameter. In step S330, the processor 110 may adjust the equalizer of the audio player 130 according to the material type, so that the audio player 130 performs audio playback toward the placement surface S1 according to the adjusted equalizer.

Specifically, the sensor 120 may be an audio receiver, and the physical parameter may be audio amplitude. The processor 110 may first play a test audio via the audio player 130. The test audio may be reflected from the placement surface S1, so that the processor 110 may receive a reflected audio corresponding to the test audio via the audio receiver. The processor 110 may analyze the reflected audio to determine the audio amplitude of the reflected audio. The processor 110 may determine the material type of the placement surface S1 according to the audio amplitude.

In the present embodiment, the test audio may be formed by a plurality of sine waves of a plurality of fixed frequencies. Furthermore, the plurality of fixed frequencies may be, for example, frequencies belonging to the mid-high frequency band, for example, the plurality of fixed frequencies may be between 4 kHz and 8 kHz. In the present embodiment, since placement surfaces of different material types have different absorption levels for sound signals, the processor 110 may determine the material type of the placement surface S1 by determining whether the audio amplitudes of the plurality of reflected audios corresponding to different frequencies are respectively greater than or less than the corresponding plurality of amplitude thresholds. In an embodiment, the processor 110 may also search for the audio curve closest to the material by the size of the audio amplitudes of the plurality of reflected audios corresponding to different frequencies to accurately determine the material type of the placement surface S1. In an embodiment, the processor 110 may also utilize a trained machine learning model to identify the audio curve.

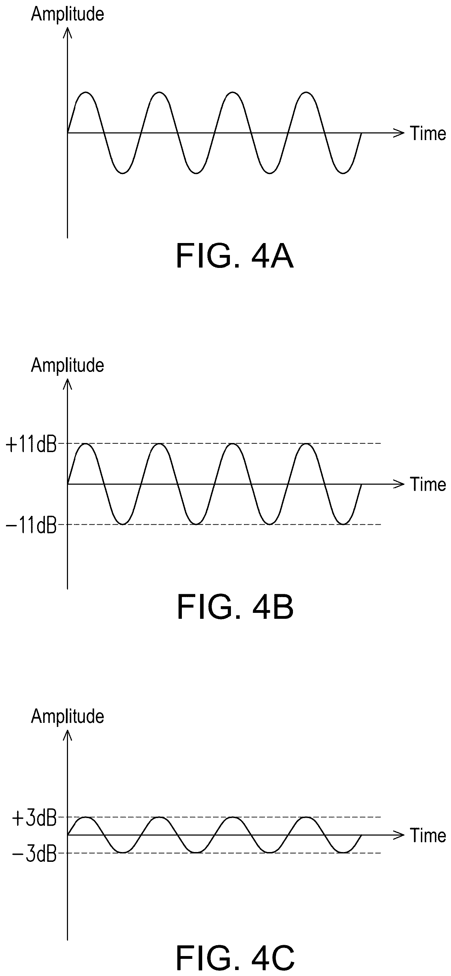

Taking the signal waveform of one specific frequency as an example, as shown in FIG. 4A, FIG. 4A is a signal waveform diagram corresponding to a test audio of one fixed frequency of an embodiment of the invention. The test audio may, for example, have a signal waveform corresponding to one fixed frequency as shown in FIG. 4A. For example, taking the placement surface S1 as a wooden tabletop as an example, the processor 110 may first play a test audio having the signal waveform as shown in FIG. 4A via the audio player 130, and the test audio may be reflected by the placement surface S1, so that the processor 110 may receive a reflected audio (reflected from the placement surface S1) corresponding to the test audio via the sensor 120. In this regard, since the wooden tabletop has a better sound reflection degree, the reflected audio may have a lower loss. As shown in FIG. 4B, FIG. 4B is a signal waveform diagram of the reflected audio of an embodiment of the invention. The reflected audio may, for example, have a signal waveform diagram of a reflected audio corresponding to the same fixed frequency as shown in FIG. 4B, and the audio amplitude is 11 dB. In other words, in an embodiment, the processor 110 may determine that the placement surface S1 is a wooden tabletop by determining whether the audio amplitude of the reflected audio corresponding to the fixed frequency is greater than a first predetermined amplitude threshold, wherein the first predetermined amplitude threshold may be, for example, 10 dB.

For another example, assuming that the placement surface S1 is a foam pad, the processor 110 may first play a test audio having the signal waveform as shown in FIG. 4A via the audio player 130. The test audio may be reflected by the placement surface S1, so that the processor 110 may receive a reflected audio (reflected from the placement surface S1) corresponding to the test audio via the sensor 120. In this regard, since the foam pad has worse sound reflection degree, the reflected audio may have higher loss. As shown in FIG. 4C, FIG. 4C is a signal waveform diagram of the reflected audio of another embodiment of the invention. The reflected audio may, for example, have a signal waveform diagram of a reflected audio corresponding to the same fixed frequency as shown in FIG. 4C, and the audio amplitude is 3 dB. In other words, in an embodiment, the processor 110 may determine that placement surface S1 is a foam pad by determining whether the audio amplitude of the reflected audio corresponding to the fixed frequency is less than a second predetermined amplitude threshold, wherein the second predetermined amplitude threshold may be, for example, 4 dB.

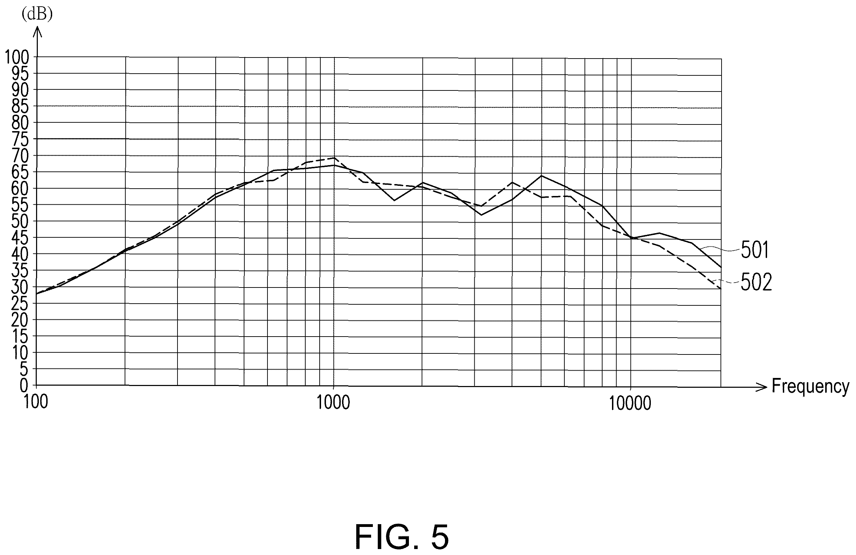

After the processor 110 determines the material type of the placement surface S1, the processor 110 may read the corresponding predetermined adjustment record file to automatically adjust the equalizer of the audio player 130. For example, as shown in FIG. 5, FIG. 5 is a schematic diagram of an audio curve of an embodiment of the invention. Taking the placement plane S1 as a foam pad as an example, an audio curve 502 generated by the audio player according to the unadjusted equalizer for audio playback is different from a standard audio curve 501, wherein the standard audio curve 501 may be generated, for example, when the computer device 100 is placed on a specific tabletop in an anechoic room, pink noise is played via the audio player 130, and reflected audio corresponding to the pink noise is received by the audio receiver. The processor 110 may adjust the equalizer of the audio player 130 according to the difference between the standard audio curve 501 and the audio curve 502. In an embodiment, the specific tabletop may be a wooden tabletop, but the invention is not limited thereto. Therefore, the processor 110 may adjust the mid-high frequency portion of the equalizer of the audio player 130 so that the listening experience of the audio played by the audio player 130 after the equalizer adjustment may be close to the effect of the computer device 100 placed on a wooden tabletop.

As a result, the audio curve generated by the audio player 130 according to the adjusted equalizer for audio playback may be closer to the standard audio curve 501 than the audio curve 502 generated by the audio player 130 according to the unadjusted equalizer for audio playback. In other words, when the user places the computer device 100 on the foam pad to operate the computer (i.e., perform audio playback), the processor 110 may determine that the computer device 100 is placed on the foam pad according to the reflected audio and automatically adjust the equalizer of the audio player 130 so that the listening experience of the user of the audio played by the audio player 130 may be closer to the effect of the computer device 100 placed on a wooden tabletop.

However, in an embodiment, the sensor 120 may also be a pressure sensor and may be disposed at the bottom surface of the second body 102. In this regard, the physical parameter obtained by the sensor 120 may be a pressure value. The processor 110 may determine the material type of the placement surface S1 according to the pressure value. For example, taking a wooden tabletop as an example, since the hardness of the wooden tabletop is higher, the pressure value obtained by the sensor 120 may be higher. The processor 110 may, for example, determine whether the pressure value obtained by the sensor 120 is higher than a first pressure threshold to determine that the placement surface S1 is a wooden tabletop. In contrast, taking a foam pad as an example, since the hardness of the foam pad is lower, the pressure value obtained by the sensor 120 may be lower. The processor 110 may, for example, determine whether the pressure value obtained by the sensor 120 is lower than a second pressure threshold to determine that the placement surface S1 is a foam pad. The first pressure threshold may be higher than or equal to the second pressure threshold.

In another embodiment, the sensor 120 may also be a displacement sensor and may be disposed at the bottom surface of the second body 102. In this regard, the physical parameter obtained by the sensor 120 may be a displacement value. The processor 110 may determine the material type of the placement surface S1 according to the displacement value. For example, taking a wooden tabletop as an example, since the hardness of a wooden tabletop is higher, the displacement value obtained by the sensor 120 may be higher. The processor 110 may, for example, determine whether the displacement value obtained by the sensor 120 is higher than a first displacement threshold to determine that the placement surface S1 is a wooden tabletop. In contrast, taking a foam pad as an example, since the hardness of a foam pad is lower, the displacement value obtained by the sensor 120 may be lower. The processor 110 may, for example, determine whether the displacement value obtained by the sensor 120 is lower than a second displacement threshold to determine that the placement surface S1 is a foam pad. The first displacement threshold may be higher than or equal to the second displacement threshold.

In another embodiment, the sensor 120 may also include a light-emitting element and a light source sensor, each of which may be disposed at the bottom surface of the second body 102. In this regard, the physical parameter obtained by the light source sensor may be a wavelength parameter. The light-emitting element may emit sensing light toward the placement surface S1, and the light source sensor may receive the reflected light of the sensing light reflected by the placement surface S1. The processor 110 may determine the material type of the placement surface S1 according to whether the wavelength parameter of the reflected light matches a specific wavelength parameter of a specific material type.

Based on the above, the computer device and the hearing correction method of the invention may effectively and automatically determine the material type of the placement surface where the computer device is currently placed via audio sensing, pressure sensing, displacement sensing, or light sensing, and may adjust the equalizer of the audio player accordingly according to the material type. Therefore, the computer device and the hearing correction method of the invention may achieve good audio playback effect regardless of the material of the placement surface.

## Claims

1. A computer device (100), comprising:
a sensor (120);
an audio player (130) facing a placement surface (S1); and
a processor (110) coupled to the sensor (120) and the audio player (130),
wherein the processor (110) obtains a physical parameter via the sensor (120) and determines a material type of the placement surface (S1) according to the physical parameter,
wherein the processor (110) adjusts an equalizer of the audio player (130) according to the material type, so that the audio player (130) performs audio playback according to the adjusted equalizer.

2. The computer device (100) of claim 1, further comprising:
a first body (101); and
a second body (102) connected to the first body (101) via a rotatable member (103), and a bottom surface of the second body (102) faces the placement surface (S1),
wherein the audio player (130) is disposed at the second body (102) and performs audio playback from the bottom surface of the second body (102) toward the placement surface (S1).

3. The computer device (100) of claim 1, wherein the sensor (120) is an audio receiver, and the physical parameter is an audio amplitude,
wherein the processor (110) plays a test audio via the audio player (130) and receives a reflected audio corresponding to the test audio via the audio receiver,
wherein the processor (110) analyzes the reflected audio to determine the audio amplitude of the reflected audio, and the processor (110) determines the material type of the placement surface (S1) according to the audio amplitude.

4. The computer device (100) of claim 3, wherein the test audio is formed by a plurality of sine waves of a plurality of fixed frequencies.

5. The computer device (100) of claim 4, wherein the fixed frequencies are between 4 kHz and 8 kHz.

6. The computer device (100) of claim 1, wherein the sensor (120) is a pressure sensor, and the physical parameter is a pressure value,
wherein the processor (110) determines the material type of the placement surface (S1) according to the pressure value.

7. The computer device (100) of claim 1, wherein the sensor (120) is a displacement sensor, and the physical parameter is a displacement value,
wherein the processor (110) determines the material type of the placement surface (S1) according to the displacement value.

8. The computer device (100) of claim 1, wherein a first audio curve generated by the audio player (130) according to the adjusted equalizer for audio playback is closer to a standard audio curve (501) than a second audio curve generated by the audio player (130) according to the unadjusted equalizer for audio playback.

9. The computer device (100) of claim 8, wherein the standard audio curve (501) is generated when the computer device (100) is placed on a specific tabletop in an anechoic room, a pink noise is played via the audio player (130), and a reflected audio corresponding to the pink noise is received via an audio receiver.

10. A hearing correction method, applicable to a computer device (100), wherein the hearing correction method comprises:
obtaining a physical parameter via a sensor (120);
determining a material type of a placement surface (S1) according to the physical parameter; and
adjusting an equalizer of an audio player (130) according to the material type, so that the audio player (130) performs audio playback toward the placement surface (S1) according to the adjusted equalizer.

11. The hearing correction method of claim 10, wherein the computer device (100) comprises a first body (101) and a second body (102), wherein the second body (102) is connected to the first body (101) via a rotatable member (103), and a bottom surface of the second body (102) faces the placement surface (S1),
wherein the audio player (130) is disposed on the second body (102) and performs audio playback from the bottom surface of the second body (102) toward the placement surface (S1).

12. The hearing correction method of claim 10, wherein the sensor (120) is an audio receiver, and the physical parameter is an audio amplitude,
wherein the step of obtaining the physical parameter via the sensor (120) comprises:
playing a test audio via the audio player (130) and receiving a reflected audio corresponding to the test audio via the audio receiver; and
analyzing the reflected audio to determine the audio amplitude of the reflected audio.

13. The hearing correction method of claim 12, wherein the test audio is formed by a plurality of sine waves of a plurality of fixed frequencies.

14. The hearing correction method of claim 13, wherein the fixed frequencies are between 4 kHz and 8 kHz.

15. The hearing correction method of claim 10, wherein the sensor (120) is a pressure sensor, and the physical parameter is a pressure value.

16. The hearing correction method of claim 10, wherein the sensor (120) is a displacement sensor, and the physical parameter is a displacement value.

17. The hearing correction method of claim 10, wherein a first audio curve generated by the audio player (130) according to the adjusted equalizer for audio playback is closer to a standard audio curve (501) than a second audio curve generated by the audio player (130) according to the unadjusted equalizer for audio playback.

18. The hearing correction method of claim 17, wherein the standard audio curve (501) is generated by placing the computer device (100) on a specific tabletop in an anechoic room, playing a pink noise via the audio player (130), and receiving a reflected audio corresponding to the pink noise via an audio receiver.

## Amended claims

### Amended claims in accordance with Rule 137(2) EPC.

1. A computer device (100), comprising:
a sensor (120);
an audio player (130) facing a placement surface (S1); and
a processor (110) coupled to the sensor (120) and the audio player (130),
wherein the processor (110) is configured to obtain a physical parameter via the sensor (120) and determine a material type of the placement surface (S1) according to the physical parameter,
wherein the processor (110) is configured to adjust an equalizer of the audio player (130) according to the material type, so that the audio player (130) is configured to perform audio playback according to the adjusted equalizer,
**characterized by** the computer device further comprising:
a first body (101); and
a second body (102) connected to the first body (101) via a rotatable member (103), and a bottom surface of the second body (102) faces the placement surface (S1),
wherein the audio player (130) is disposed at the second body (102) and configured to perform audio playback from the bottom surface of the second body (102) toward the placement surface (S1), and
the computer device (100) is implemented as a laptop computer.

2. The computer device (100) of claim 1, wherein the sensor (120) is an audio receiver, and the physical parameter is an audio amplitude,
wherein the processor (110) is configured to play a test audio via the audio player (130) and receive a reflected audio corresponding to the test audio via the audio receiver,
wherein the processor (110) is configured to analyze the reflected audio to determine the audio amplitude of the reflected audio, and the processor (110) is configured to determine the material type of the placement surface (S1) according to the audio amplitude.

3. The computer device (100) of claim 2, wherein the test audio is formed by a plurality of sine waves of a plurality of fixed frequencies.

4. The computer device (100) of claim 3, wherein the fixed frequencies are between 4 kHz and 8 kHz.

5. The computer device (100) of claim 1, wherein the sensor (120) is a pressure sensor, and the physical parameter is a pressure value,
wherein the processor (110) is configured to determine the material type of the placement surface (S1) according to the pressure value.

6. The computer device (100) of claim 1, wherein the sensor (120) is a displacement sensor, and the physical parameter is a displacement value,
wherein the processor (110) is configured to determine the material type of the placement surface (S1) according to the displacement value.

7. The computer device (100) of claim 1, wherein a first audio curve generated by the audio player (130) according to the adjusted equalizer for audio playback is closer to a standard audio curve (501) than a second audio curve generated by the audio player (130) according to the unadjusted equalizer for audio playback.

8. The computer device (100) of claim 7, wherein the standard audio curve (501) is generated when the computer device (100) is placed on a specific tabletop in an anechoic room, a pink noise is played via the audio player (130), and a reflected audio corresponding to the pink noise is received via an audio receiver.

9. An audio correction method, applicable to a computer device (100), wherein the audio correction method comprises:
obtaining a physical parameter via a sensor (120);
determining a material type of a placement surface (S1) according to the physical parameter; and
adjusting an equalizer of an audio player (130) according to the material type, so that the audio player (130) performs audio playback toward the placement surface (S1) according to the adjusted equalizer,
wherein the audio correction method is **characterized in that** the computer device (100) comprises a first body (101) and a second body (102), wherein the second body (102) is connected to the first body (101) via a rotatable member (103), and a bottom surface of the second body (102) faces the placement surface (S1),
the audio player (130) is disposed on the second body (102) and performs audio playback from the bottom surface of the second body (102) toward the placement surface (S1), and
the computer device (100) is implemented as a laptop computer.

10. The audio correction method of claim 9, wherein the sensor (120) is an audio receiver, and the physical parameter is an audio amplitude,
wherein the step of obtaining the physical parameter via the sensor (120) comprises:
playing a test audio via the audio player (130) and receiving a reflected audio corresponding to the test audio via the audio receiver; and
analyzing the reflected audio to determine the audio amplitude of the reflected audio.

11. The audio correction method of claim 10, wherein the test audio is formed by a plurality of sine waves of a plurality of fixed frequencies.

12. The audio correction method of claim 11, wherein the fixed frequencies are between 4 kHz and 8 kHz.

13. The audio correction method of claim 9, wherein the sensor (120) is a pressure sensor, and the physical parameter is a pressure value.

14. The audio correction method of claim 9, wherein the sensor (120) is a displacement sensor, and the physical parameter is a displacement value.

15. The audio correction method of claim 9, wherein a first audio curve generated by the audio player (130) according to the adjusted equalizer for audio playback is closer to a standard audio curve (501) than a second audio curve generated by the audio player (130) according to the unadjusted equalizer for audio playback.

16. The audio correction method of claim 15, wherein the standard audio curve (501) is generated by placing the computer device (100) on a specific tabletop in an anechoic room, playing a pink noise via the audio player (130), and receiving a reflected audio corresponding to the pink noise via an audio receiver.
